Europäisches Patentamt

European Patent Office

Office européen des brevets

(19)

(11) Publication number: **0 192 015**

**A1**

(12)

# EUROPEAN PATENT APPLICATION

(21) Application number: **85850051.5**

(22) Date of filing: **12.02.85**

(51) Int. Cl.⁴: **F 16 J 15/02**

(43) Date of publication of application:
**27.08.86 Bulletin 86/35**

(84) Designated Contracting States:
**AT BE CH DE FR GB IT LI NL**

(71) Applicant: **Söderberg, Valter
Torngatan 12
S-334 00 Anderstorp(SE)**

(72) Inventor: **Söderberg, Valter
Torngatan 12
S-334 00 Anderstorp(SE)**

(74) Representative: **Linde, Leif
Vernamo Patentbyrä AB P.O. Box 1
S-270 11 Abbekas(SE)**

(54) **A sealing device.**

(57) A sealing device for sealing a joint between a first and a second machine element (1, 2) comprises a sealing element (6) consisting of a rigid material, preferably metal, and further comprising sealing surfaces (5) on the machine elements. The sealing element (6) comprises a first and a second sealing portion, which sealing portions are adapted sealingly to engage the sealing surfaces of each of the machine elements when the sealing element is being compressed between the machine elements. Said first sealing portion is adapted to engage at its end portion a sealing surface on said first machine element which sealing surface is substantially parallel with the direction of compression of the sealing element between the machine elements. A projecting portion of said first sealing portion extends obliquely in relation to said sealing surface on said first machine element which sealing surface is substantially parallel with the direction of compression of the sealing element, the projecting portion extending obliquely in such a way that the end portion thereof is displaced towards said sealing surface when the sealing device is being compressed.

Fig. 1

Fig. 2

Croydon Printing Company Ltd

0192015

The present invention relates to a sealing device for sealing a joint between a first machine element and a second machine element.

There exist substantial problems in providing liquid seal joints between different machine elements included in constructions containing or transmitting a liquid fluid under pressure. The sealing problem is even more difficult in the case that the fluid has a high temperature as the material of the sealing device thereby also obtains a high temperature leading to for example material expansions.

Previously known sealing devices which are able to maintain tightness in a joint between two machine elements at high pressures and high temperatures are complicated and expensive. The sealing devices previously known have a short service life because of the fact that they usually comprise sealing elements of elastic materials which are sensitive to chemical attacks and are aged during the influence of increased temperatures.

The object of the invention is to provide a simple and cheap sealing device being able to maintain tightness in a joint between two machine elements in constructions containing or transferring a fluid which is under pressure and has an increased temperature.

In order to comply with this object the sealing device according to the invention comprises a sealing element consisting of a rigid material, preferably metal, and sealing surfaces on the two machine elements, said sealing element comprising a first sealing portion and a second sealing portion, which are adapted sealingly to engage the sealing surfaces of each of the machine elements when the sealing element is compressed between the machine elements and at least said first sealing portion forms a projecting portion, wherein said first sealing portion is adapted to engage with its end portion a sealing surface of said first machine element, which sealing surface is substantially parallel with the direction of compression of the sealing element and wherein said projecting portion extends obliquely in such a way in relation to said sealing surface of said first machine element which sealing surface is substantially parallel with the direction of compression of the sealing element that the end portion of the projecting portion is displaced towards said sealing surface when the sealing device is being compressed.

Thus, the invention solves the problem of providing a sealing device which is able to resist high pressures and high temperatures because of the fact that the sealing device is designed in such a way that the sealing element thereof can consist of a rigid material, preferably metal.

In a preferred embodiment of the invention also said second sealing portion forms a projecting portion which is adapted to engage with its end portion a sealing surface which is substantially parallel with the direction of compression of the sealing element.

Preferably the sealing element has a substantially V- or Y-shaped cross-section and the sealing element forms at its said projecting portions of the first and second sealing portions, the end portions of said legs engaging the sealing surfaces of the first and the second sealing element, respectively, which sealing surfaces are substantially parallel with the direction of compression of the sealing element.

The invention is described in the following with reference to the accompanying drawings.

Fig. 1 is a cross-sectional view of an embodiment of a sealing element in the form of a sealing ring constituting a part of a sealing device according to the invention.

Fig. 2 is a cross-sectional view of a sealing device according to the invention including the sealing element of Fig. 2 in operative position in the device.

Fig. 3 is a cross-sectional view of a modified embodiment of a sealing element in form of a sealing ring forming a part of a sealing device according to the invention.

Fig. 4 is a cross-sectional view of a sealing device according to the invention, the sealing element according to Fig. 3 having an operative position in said device.

Fig. 5 is a cross-sectional view of a further embodiment of a sealing element in the form of a sealing ring forming a part of a sealing device according to the invention.

Fig. 6 is a cross-sectional view of a sealing device according to the invention, including the sealing element according to Fig. 5 before the parts of the sealing device are connected with each other.

Fig. 7 is a cross-sectional view showing the sealing device according to Fig. 6 in its mounted position.

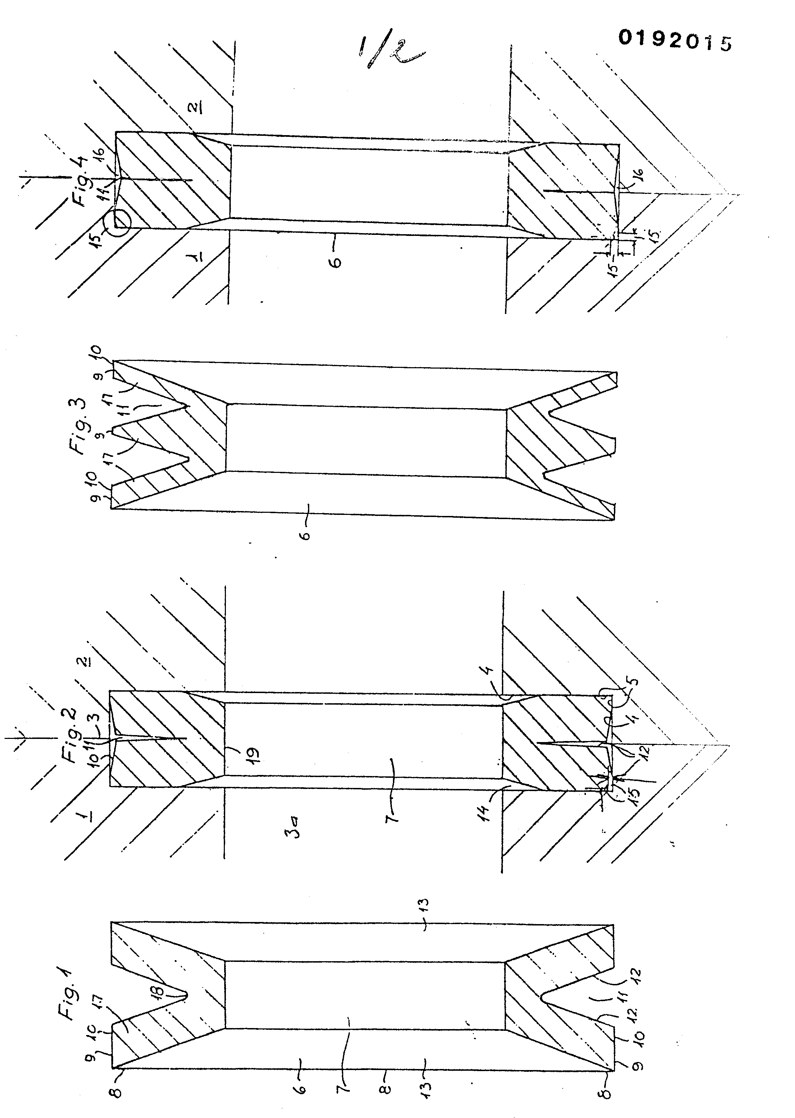

In Figs 2, 4, 6, 7 and 8 reference numerals 1 and 2 designate a first machine element and a second machine element, respectively, which are intended to be connected with each other so that a sealed joint is provided between the machine elements. The machine elements 1 and 2 comprise a seat 4 receiving a sealing element 6. The seat 4 forms sealing surfaces constituting together with the sealing element a sealing device according to the invention.

For example the machine elements 1 and 2 are constituted by elements of a pump, a valve, a hydraulic circuit, a conduit system or other constructions in which fluids such as pressurized liquids in the form of oil is sealingly enclosed in the machine elements. Within the mechanical industry there are a lot of sealing places at which high pressures and great pressure variations are present. An example thereof is hydraulic presses. Thus, there is in Fig. 2 shown a conduit 3a for a pressure fluid, the sealing element 6 consisting of a sealing ring having a through opening 7 for conducting the fluid.

In Figs 1, 3 and 5 there are shown different embodiments of sealing elements 6 intended to be included in sealing devices according to the invention. Thereby, it is important that the sealing elements consist of a rigid material which is resistent against high pressures and temperatures. Metals, such as steel, copper, aluminium, etc are examples of such suitable material.

The peripheral edge 8 of the sealing elements 6 according to the embodiments of Fig. 1 and 3 has larger dimensions than the rest of the sealing elements. This edge portion of the sealing elements merges in an envelope surface 9 axially or substantially axially positioned in the sealing element 6. The sealing elements are formed with recesses 11 or in the embodiment of Fig. 1 a groove 11 or a wedge-shaped cavity having two wall surfaces 12 facing each other.

In order to seal a joint by means of a device according to the invention a sealing ring 6 is positioned in a seat 4 in one of the machine elements 1 and 2, whereupon the other machine element is connected with the first machine element. The machine elements 1 and 2 are connected with each other in any suitable way. Thereby the sealing ring is deformed by being compressed, the edge portions of the sealing ring thereby sealingly engaging the edge portions 5 of the seat 4, said edge portions 5 constituting the sealing surfaces constituting parts of the sealing device according to the invention, so that the reliable sealing is provided between the machine elements 1 and 2 even when the elements conduct a fluid having high pressure and high temperature.

The sealing is provided substantially in the region of the edge 5 of the seats 4, see reference numerals 15 in Figs 2 and 4.

When conducting a high pressure fluid there is provided a sealing which is even more reliable because of the fact that the pressure of the fluid acts on the sealing ring or pressure surfaces 13 thereof, said pressure surfaces extending from the peripheral edge portions 8 of the sealing element 6 in the direction of the central portion of the sealing element. The pressure surfaces 13 of the sealing element can have such an extension that they extend into the seat 4, see reference numeral 14 in Fig. 2. The higher pressure in the conduit 3a the better sealing by pressure action on the pressure surfaces 13, 14 and on the inner surface 19 of the sealing element 6. If there is a pressure fluid outside the sealing regions 15 the pressure action on the wall surfaces 12 of the groove 11 and also on the sealing surfaces 10 will act for maintaining the edge portions of the sealing element 6 in the sealing position.

In mounting the sealing element 6 the legs 17 defined by the groove 11 and the side surfaces of the sealing element 6 are rotated around the inner end 18 of the groove 11, so that the sealing element is compressed and the width of the groove 11 is reduced providing a reaction force in the legs 17. Thereby the sealing surfaces 10 of the legs 17 extend at an angle in relation to the sealing element 6, see reference numeral 16 in Fig. 2, increasing the outer diameter of the sealing element so that the seat 4 is filled up and the sealing element is deformed at the edge portions 15.

In Fig. 3 there is shown an embodiment of the sealing element 6 having two grooves 11. Thereby the sealing element is provided with three legs 17, the sealing function being provided substantially by means of the two side legs.

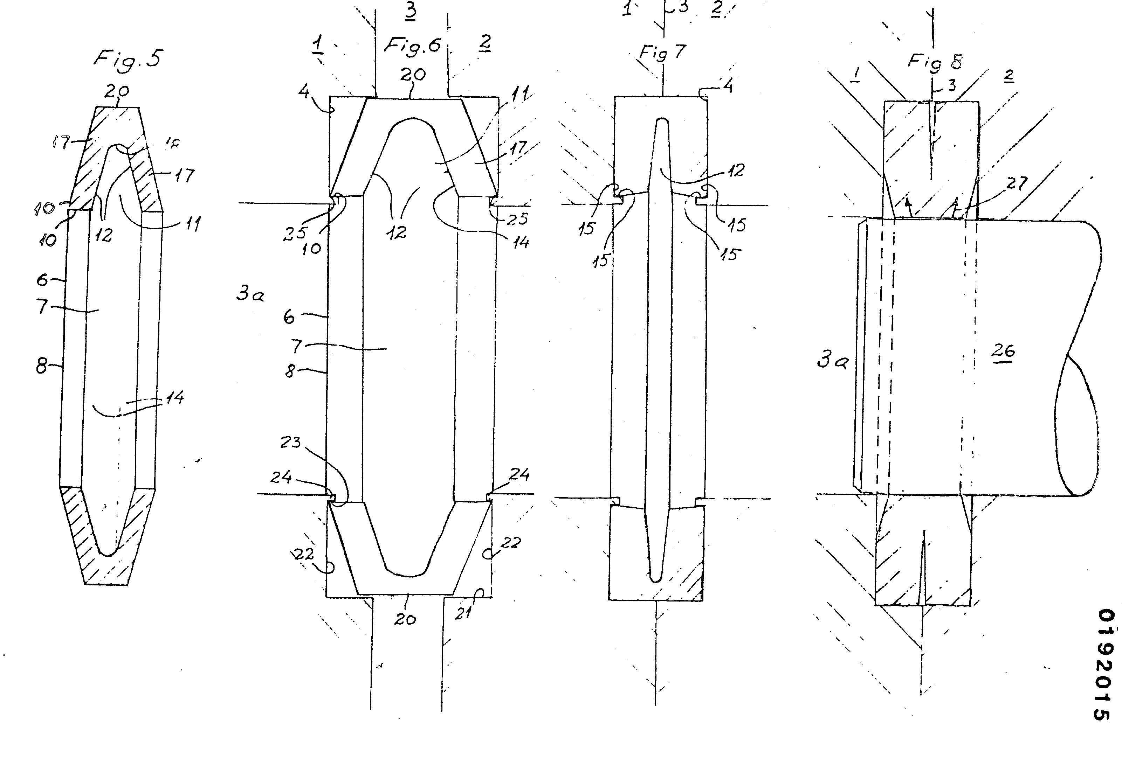

In Figs 5, 6 and 7 there is shown another embodiment of a sealing element 6 of the sealing device according to the invention. In the embodiment of the sealing element shown in this figures the tolerances of manufacturing tools or the like or of the seats 4 and the surface quality thereof are of less importance with regard to the possibilities of obtaining a good sealing function. The sealing element 6 consists of the same type of material and has a corresponding function and type of action as described with reference to the above embodiments of sealing elements according to the invention. Thus, the sealing element 6 has an inner groove 11 having opposing wall surfaces 12 having the direct function of pressure surfaces 14. In mounting the sealing element 6 the diameter of the sealing element is increased as a result of the reduction of the thickness of the sealing element so that the peripheral surface 20 of the sealing element 6 is forced against the sealing surfaces 21 of the sealing device, said surfaces being formed at the bottom of the seat 4. In order to provide a larger sealing surface the seat 4 can be provided with a sealing flange 24 in a special embodiment of the device according to the invention. These sealing flanges 24 constitute buckers for the sealing element 6 when the element is compressed. Thereby the edge portions 23 of the inner surfaces of the sealing element 6 will constitute active sealing portions of the sealing element 6. In conducting fluids under high pressure there is obtained an improved sealing action by means of pressure action on the pressure surfaces 14 of the wall surfaces 12 of the sealing legs 17.

An advantage of the sealing device according to the invention is that the sealing element of the device can be chosen from material resistant against chemical attacks, for example and acid-proof material. It is also possible to choose the material of the sealing element with regard to the material of the machine elements between which the joint shall be sealed, thereby providing the sealing element with the same properties with regard to coefficient of firmal expansion and so on. However, it is preferred to choose a material of the sealing element which is somewhat softer than the material of the sealing surfaces with which the sealing element is intended to cooperate. Thereby the material of the sealing element will by deformation be pressed into the pores of the material of the sealing surfaces and the risk of destruction of the sealing surfaces is obviated.

In mounting a sealing element 6 of the sealing device according to the invention there can be used a bucker 26 in accordance with what is shown in Fig. 8. In assembling the machine elements 1 and 2 for sealing the joint 3 the bucker 26 is introduced in the sealing element, providing an improved engagement and sealing within the sealing areas 15 in the directions shown by means of the arrows 27. A corresponding bucker can be used when mounting a sealing element 6 of the kind shown in for example Fig. 5.

The invention can be modified within the scope of the following claims. For example, the sealing element of the sealing device according to the invention can be of another design that the design according to the embodiments shown with reference to the drawings and consist of other materials than stated in the specification. The seats of the machine element to be sealed can have any suitable shape and the sealing elements can be adapted thereto. An adequate sealing is obtained even if the grooves of the sealing element are substantially closed after the mounting operation.

0192015

1. A sealing device for sealing a joint between a first and a second machine element, comprising a sealing element consisting of a rigid material, preferably metal, and further comprising sealing surfaces on the two machine elements, the sealing element having a first and a second sealing portion which sealing portions are adapted sealingly to engage the sealing surfaces of each of the machine elements when the sealing element is compressed between the machine element, at least said first sealing portion constituting a projecting portion, c h a r a c t e r i z e d in that said first sealing portion is adapted to engage at its end portion a sealing surface on said first machine element, which sealing surface is substantially parallel with the direction of compression of the sealing element between the machine elements and that said projecting portion extends obliquely in relation to said sealing surface of the first machine element, which surface is substantially parallel with the direction of compression of the sealing element, said projecting portion extending obliquely in such a way that the end portion of the projecting portion is displaced towards said sealing surface when the sealing device is being compressed.

2. A sealing device as claimed in claim 1, c h a r a c t e r i z e d in that also said second sealing portion constitutes a projecting portion which is adapted to engage at its end portion a sealing surface which is substantially parallel with the direction of compression of the sealing element.

3. A sealing device as claimed in any of claims 1 or 2, c h a r a c t e r i z e d in that said sealing element is of substantially V- or Y-shaped cross-section and constitutes at its legs said projecting portion of said first and second sealing portion and engages at the end portions of said legs the sealing surfaces of said first and said second machine element, respectively, which surfaces are substantially parallel with the direction of compression of the sealing element.

4. A sealing device as claimed in of the preceding claims, c h a r a c t e r i z e d in that the end portion of the sealing portion or the sealing portions engages the sealing surfaces which are parallel with the direction of compression of the sealing element by means of narrow edge surfaces.

5. A sealing device as claimed in any of the preceding claims, c h a r a c t e r i z e d by a support surface positioned at the opposite side of the sealing element in relation to the sealing surface which is substantially parallel with the direction of compression of the sealing element.

0192015

6. A sealing device according to any of the preceding claims, c h a r a c t e r i z e d in that the sealing element and the machine elements consist of material having substantially the same coefficient of thermal expansion.

Fig.1

Fig.2

Fig.3

Fig.4

0192015

Fig.5

Fig.6

Fig 7

Fig 8

2/2

0192015

**European Patent Office**

**EUROPEAN SEARCH REPORT**

0192015

Application number

EP 85 85 0051

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | FR-A-1 554 853 (C. DECOT) <br> * figures 1, 2; page 1, right-hand column, paragraph 3 * | 1-3 | F 16 J 15/02 |
| A | FR-A-1 521 681 (J.H.C. GALLAND) <br> * figure 2; page 2; left-hand column; paragraph 5 * | 1-6 | |
| A | US-A-3 690 682 (H.E. FERRILL) <br> * figure 5; abstract * | 1 | |
| A | DE-A-2 144 957 (RAYCHEM CORP.) <br> * figures 2, 3 * | 1 | |
| A | WO-A-8 203 257 (FLUOROCARBON) | | |

TECHNICAL FIELDS SEARCHED (Int Cl 4)

F 16 J 15/00
F 16 B 39/00

The present search report has been drawn up for all claims

| Place of search <br> BERLIN | Date of completion of the search <br> 02-05-1986 | Examiner <br> GERTIG I. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82